# EUROPÄISCHE PATENTSCHRIFT

(11) **EP 4 079 500 B1**
(45) Veröffentlichungstag und Bekanntmachung des Hinweises auf die Patenterteilung: **24.04.2024**
(21) Anmeldenummer: 22159376.7
(22) Anmeldetag: 01.03.2022
(51) Int. Cl.: B30B 11/08, B30B 15/26, G01F 23/00, B30B 15/30, G01F 23/263

(54) **SYSTEM ZUM KONTINUIERLICHEN VERARBEITEN VON PULVERFÖRMIGEN PRODUKTEN**
SYSTEM FOR CONTINUOUS PROCESSING OF POWDERY PRODUCTS
SYSTÈME DE TRAITEMENT CONTINU DES PRODUITS PULVÉRULENTS

(30) Priorität: 20.04.2021 DE 102021109944
(43) Veröffentlichungstag der Anmeldung: 26.10.2022
(73) Patentinhaber: Fette Compacting GmbH, 21493 Schwarzenbek (DE)
(72) Erfinder: Walter, Nicolas, 22149 Hamburg (DE); Evers, Alexander, 22914 Bargteheide (DE)
(74) Vertreter: Hauck Patentanwaltspartnerschaft mbB

(56) Entgegenhaltungen:
- EP-A1- 3 013 571
- WO-A1-2020/229164
- WO-A1-2020/260600
- CN-A- 107 234 831
- CN-U- 203 557 740
- DE-A1-102017 207 162
- JP-A- 2008 183 168
- JP-A- 2017 177 139
- MICHAEL CHRISTIAN MARTINETZ ET AL: "A Continuous Operation Concept for a Rotary Tablet Press Using Mass Flow Operating Points", CHEMIE INGENIEUR TECHNIK, WILEY VCH. VERLAG, WEINHEIM; DE, Bd. 89, Nr. 8, 7. Juli 2017 (2017-07-07), Seiten 1006-1016, XP071184108, ISSN: 0009-286X, DOI: 10.1002/CITE.201700017

## Beschreibung

Die Erfindung betrifft ein System zum kontinuierlichen Verarbeiten von pulverförmigen Produkten, umfassend mindestens zwei Systemeinlässe für pulverförmige Produkte, einen Mischer zum kontinuierlichen Mischen der pulverförmigen Produkte, wobei der Mischer mindestens einen mit den mindestens zwei Systemeinlässen verbundenen Mischereinlass aufweist, und wobei der Mischer einen Mischerauslass für eine aus den pulverförmigen Produkten erzeugte Produktmischung aufweist, weiter umfassend eine Produktionsmaschine zum kontinuierlichen Verarbeiten der Produktmischung, insbesondere eine Rundläuferpresse oder eine Kapselfüllmaschine, wobei die Produktionsmaschine einen mit dem Mischerauslass verbundenen Maschineneinlass und einen Maschinenauslass für durch die Produktionsmaschine aus der Produktmischung hergestellte Erzeugnisse aufweist, und wobei zwischen dem Mischerauslass und dem Maschineneinlass eine Fördereinrichtung zum Fördern der Produktmischung von dem Mischerauslass zu dem Maschineneinlass angeordnet ist.

In derartigen Systemen werden zum Beispiel pharmazeutische Produkte zu oralen festen Darreichungsformen (Oral Solid Dosages OSD), wie zum Beispiel Tabletten oder Kapseln, verarbeitet. Hierzu sind als Produktionsmaschinen zum Beispiel Rundläuferpressen oder Kapselfüllmaschinen vorgesehen. Über mehrere Systemeinlässe werden unterschiedliche pulverförmige Produkte kontinuierlich zugeführt, zum Beispiel mindestens ein aktiver pharmazeutischer Bestandteil (Active Pharmaceutical Ingredient API) und mindestens ein Exzipient. Diese über die Systemeinlässe zugeführten pulverförmigen Produkte werden in der Regel mittels Dosiereinrichtungen in dosierter Form einem Mischer zugeführt, der aus den pulverförmigen Produkten eine in der Produktionsmaschine zu verarbeitende Produktmischung herstellt. Die pulverförmigen Produkte können kontinuierlich einem oder mehreren Einlässen des Mischers zugeführt werden und in dem Mischer gemischt werden. An einem Auslass des Mischers wird die hergestellte Produktmischung zur Zuführung zu der Produktionsmaschine bereitgestellt. Die über einen Einlass der Produktionsmaschine zugeführte Produktmischung wird in der Produktionsmaschine zu den jeweiligen Erzeugnissen verarbeitet, und die hergestellten Erzeugnisse werden am Auslass der Produktionsmaschine bereitgestellt, wo sie einer weiteren Verarbeitung zugeführt werden können, zum Beispiel einer Verpackung.

Ein solches System ist zum Beispiel bekannt aus EP 3 013 571 A1. Die Komponenten des Systems, insbesondere die Einlässe, die Dosiereinrichtungen, der Mischer, und eine Tablettenpresse, sind vertikal übereinander angeordnet, so dass die pulverförmigen Produkte schwerkraftbedingt von den Einlässen und den Dosiereinrichtungen zu dem Mischer und der Tablettenpresse fließen. Eine solche Anordnung hat den Nachteil, dass das System eine erhebliche Höhe von 5 m und mehr beansprucht. Dies erfordert besondere Produktionsräume und macht den Zugang für Bedienpersonal aufwendig.

In WO 2020/260600 A1 ist ein System zum kontinuierlichen Verarbeiten von pulverförmigen Produkten gemäss dem Oberbegriff des Anspruchs 1 vorgeschlagen, bei dem ein Zuführ-, Dosier- und Mischmodul seitlich neben einer Produktionsmaschine, zum Beispiel einer Rundläuferpresse, angeordnet ist. Diese Anordnung der Systemkomponenten nebeneinander auf einem gemeinsamen Boden hat den Vorteil, dass das System eine erheblich geringere Höhe aufweist und so in üblichen Produktionsräumen eingesetzt werden kann. Gleichzeitig ist der Zugang für Bedienpersonen erleichtert. Aufgrund der Anordnung der Systemkomponenten nebeneinander liegt der Auslass des Mischers auf einem vertikal niedrigeren Niveau als der Einlass der Produktionsmaschine. Die durch den Mischer bereitgestellte Produktmischung muss entsprechend von dem niedrigeren Niveau auf das höhere Niveau des Einlasses der Produktionsmaschine gebracht werden. Hierzu wird in WO 2020/260600 A1 eine vorzugsweise pneumatische Vakuumfördereinrichtung vorgeschlagen. Diese wirkt einer unerwünschten Entmischung der Bestandteile der Produktmischung effektiv entgegen.

Beispielsweise in Rundläuferpressen wird in Kavitäten gefülltes Pulvermaterial mittels Ober- und Unterstempeln zu Presslingen, insbesondere Tabletten, verpresst. Das Pulvermaterial wird mittels einer Fülleinrichtung der Rundläuferpresse in die Kavitäten gefüllt. Derartige Fülleinrichtungen umfassen regelmäßig ein Füllrohr, durch das das Pulvermaterial in der Regel schwerkraftbedingt in eine Füllkammer fällt, aus der es wiederum in der Regel mittels Schwerkraft in die Kavitäten gelangt. Dabei ist es wünschenswert, den Füllstand in der Fülleinrichtung, insbesondere in dem Füllrohr zu überwachen, um jederzeit eine ausreichende Pulververfügbarkeit sicherzustellen. Gleiches gilt zum Beispiel für Kapselfüllmaschinen. Es ist vorgeschlagen worden, hierzu Sensoren im Inneren des Füllrohrs anzuordnen. Die Anordnung eines Sensors im Pulvermaterialfluss führt allerdings zu Störungen des Pulverflusses, wie zum Beispiel eine Brückenbildung. Dies kann die Pulververfügbarkeit in unerwünschter Weise beeinträchtigen.

Aus DE 10 2017 207 162 A1 ist eine Rundläufertablettenpresse mit einem kapazitiven Füllstandssensor zum Messen der Pulverhöhe in einem Steigrohr, das in einen Füllschuh ausläuft, bekannt. Auch in EP 2 400 275 A1 wird eine Vorrichtung zur nicht-invasiven, berührungslosen kapazitiven Füllstandsmessung von Schüttgütern in einem Behälter beschrieben. Der Füllstandssensor kommt mit dem Füllmedium, dessen Füllhöhe ermittelt werden soll, nicht in Berührung. Vielmehr sind Elektroden vorgesehen, die gleichsam einem aufgeklappten Plattenkondensator angeordnet sind und zwischen denen ein hochfrequentes elektrisches Wechselfeld erzeugt wird, welches das zu messende Material zerstörungsfrei durchdringt. Die Kapazität des so gebildeten Kondensators hängt von der Permittivität des Füllmaterials ab. Dabei besitzt das zu vermessende Füllmaterial eine andere Permittivität als Luft. Auf diese Weise führt eine unterschiedlich hohe Bedeckung der Sensorfläche mit dem zu vermessenden Material zu einer unterschiedlichen Kapazität des Kondensators. Hieraus kann auf die Füllhöhe des Materials in dem Behälter geschlossen werden.

Ein Problem stellen dabei externe Störeinflüsse dar, wie zum Beispiel externe elektromagnetische Felder oder externe Objekte, wie zum Beispiel eine Hand einer Bedienperson in der Nähe der Messelektroden. Um die Störungsanfälligkeit für Einflüsse von außen zu verringern, wird in EP 2 400 275 A1 vorgeschlagen, mehrere Messelektroden in unterschiedlichen horizontalen Ebenen anzuordnen, die eine Messfläche mit vertikaler Ausdehnung definieren, und mindestens eine Referenzelektrode vorzusehen, die eine Referenzfläche mit vertikaler Ausdehnung definiert. Jede der mehreren Messelektroden bildet zusammen mit der Referenzelektrode jeweils einen Kondensator aus. Dabei werden mindestens zwei Kondensatoren gemessen und die Messwerte zueinander in Beziehung gesetzt. Durch Plausibilitätsprüfungen sollen äußere Einflüsse als Störquellen rechnerisch eliminiert werden. Die bekannte Vorrichtung ist jedoch von erheblichem konstruktivem und auswertetechnischem Aufwand. Auch bietet die Plausibilitätsbetrachtung nicht immer ein zuverlässiges Ergebnis.

Zum Schutz vor externen Störquellen bei der kapazitiven Füllstandsmessung ist aus der Praxis weiterhin das sogenannte Active Shielding bekannt, bei dem eine als Schild dienende Elektrode bei der Messung auf das gleiche Spannungspotential angesteuert wird wie die Messelektroden. Während durch dieses Active Shielding der Einfluss externer Störquellen verringert werden kann, besteht dennoch weiterhin ein Bedürfnis nach einem verbesserten Schutz gegenüber Störungen bei der kapazitiven Füllstandsmessung.

Bei einem System der oben beschriebenen Art mit einer Fördereinrichtung zum Fördern der am Mischerauslass bereitgestellten Produktmischung zu einem Maschineneinlass einer Produktionsmaschine kann es zu Schwankungen der durch die Fördereinrichtung am Maschineneinlass bereitgestellten Produktmenge kommen. Beispielsweise die oben erläuterten pneumatischen Vakuumfördereinrichtungen fördern die Produktmischung zyklisch bzw. intermittierend zum Maschineneinlass. Dabei wird zunächst am Auslass der Förderstrecke ein Vakuum erzeugt und eine Produktmenge mittels des Vakuums durch die Förderlinie gefördert. Anschließend wird ein Auslassventil der Förderlinie geöffnet, um die geförderte Produktmenge dem Maschineneinlass zur Verfügung zu stellen. Anschließend wird das Auslassventil geschlossen und der Zyklus wiederholt. Bei derartigen Fördereinrichtungen sind Schwankungen der bereitgestellten Produktmenge also systemimmanent.

Es ist bekannt, dass sich insbesondere bei einem langen Betrieb eines kontinuierlich arbeitenden Systems der hier in Rede stehenden Art Fehler in Massenströmen der Systemkomponenten so aufsummieren, dass diese Fehler für eine Erhaltung des ordnungsgemäßen Produktionsbetriebs kompensiert werden müssen, beispielsweise durch Ansteuerung eines geeigneten Produktionsparameters der Produktionsmaschine. Dies kann zum Beispiel auf Grundlage eines an der Fülleinrichtung der Produktionsmaschine angeordneten Füllstandssensors erfolgen. Eine Steuerung bzw. Regelung auf Grundlage einer Füllstandsmessung an der Fülleinrichtung der Produktionsmaschine ist aber nur dann in zufriedenstellender Weise möglich, wenn ein im Wesentlichen kontinuierlicher Produktstrom vom Mischer in die Fülleinrichtung der Produktionsmaschine gelangt. Dies ist in der Praxis, und abhängig von der verwendeten Fördereinrichtung, gerade nicht der Fall. Diese Schwankungen machen es praktisch unmöglich, zum Beispiel den Füllstand in der Fülleinrichtung durch Steuerung bzw. Regelung eines Produktionsparameters der Produktionsmaschine konstant zu halten.

CN 203557740 U beschreibt ein Verfahren zum Herstellen von Presslingen in einer Tablettenpresse mit vorgeschaltetem Mischer. Dabei wird in dem Mischer batchweise eine Produktmischung zur Verfügung gestellt, wobei die nachfolgende Tablettenpresse die Pulvermischung ebenfalls batchweise zu Presslingen verarbeitet. Am Mischer und an der Tablettenpresse sind Füllstandssensoren angeordnet, mit denen die vollständige Befüllung des Mischers zum Starten des Mischvorgangs, das vollständige Entladen einer in dem Mischer erzeugten Produktmischung und das Vorhandensein der Pulvermischung in der Tablettenpresse zum Start des Pressvorgangs überwacht werden.

CN 107 234 831 A beschreibt eine Rundläuferpresse mit einer Fülleinrichtung, an oder in der mindestens eine Messeinrichtung angeordnet ist zum Überwachen der Füllmaterialverfügbarkeit in der Fülleinrichtung.

Aus "MICHAEL CHRISTIAN MARTINETZ ET AL: "A Continuous Operation Concept for a Rotary Tablet Press Using Mass Flow Operating Points", CHEMIE INGENIEUR TECHNIK, WILEY VCH. VERLAG, WEINHEIM; DE, Bd. 89, Nr. 8, 7. Juli 2017 (2017-07-07), Seiten 1006-1016, XP071184108, ISSN: 0009-286X, DOI: 10.1002/CITE.201700017" ist ein Konzept für einen kontinuierlichen Betrieb einer Rundläufertablettenpresse unter Verwendung von Massenflussarbeitspunkten bekannt.

Ausgehend von dem erläuterten Stand der Technik liegt der Erfindung daher die Aufgabe zugrunde, ein System der eingangs genannten Art bereitzustellen, mit dem die oben erläuterten Probleme überwunden werden. Insbesondere liegt der Erfindung die Aufgabe zugrunde, auch bei Schwankungen der durch die Fördereinrichtung am Maschineneinlass bereitgestellten Produktmenge eine zuverlässige Steuerung mindestens eines Produktionsparameters der Produktionsmaschine zu ermöglichen.

Die Erfindung löst die Aufgabe durch den Gegenstand von Anspruch 1. Vorteilhafte Ausgestaltungen finden sich in den abhängigen Ansprüchen, der Beschreibung und den Figuren.

Für ein System der eingangs genannten Art löst die Erfindung die Aufgabe dadurch, dass an einer Fülleinrichtung der Produktionsmaschine ein erster Füllstandssensor zum Messen des Pulverfüllstands in der Fülleinrichtung angeordnet ist, und dass an einem zwischen dem Mischerauslass und der Fördereinrichtung angeordneten Förderreservoir der Fördereinrichtung ein zweiter Füllstandssensor zum Messen des Pulverfüllstands in dem Förderreservoir angeordnet ist, und dass eine Steuereinrichtung vorgesehen ist, die die von dem ersten Füllstandssensor und dem zweiten Füllstandssensor ermittelten Messdaten empfängt, und die dazu ausgebildet ist, auf Grundlage der empfangenen Messdaten mindestens einen Produktionsparameter der Produktionsmaschine anzusteuern.

Das erfindungsgemäße System dient zum kontinuierlichen Verarbeiten von pulverförmigen Produkten, insbesondere trockenen pulverförmigen Produkten. Wie erläutert, kann es sich hierbei zum Beispiel um pharmazeutische Produkte handeln. So können die pulverförmigen Produkte zum Beispiel mindestens einen aktiven pharmazeutischen Bestandteil (API) und mindestens einen Exzipienten umfassen. Die pulverförmigen Produkte werden dem System über mindestens zwei, beispielsweise mehr als zwei, Systemeinlässe zugeführt. Die Systemeinlässe können jeweils einen Dosierer umfassen, mit denen die Zuführung der Produkte dosiert wird. Über Verbindungsleitungen werden die über die Systemeinlässe zugeführten pulverförmigen Produkte kontinuierlich dem mindestens einen Mischereinlass zugeführt. Der Mischer erzeugt aus den zugeführten pulverförmigen Produkten kontinuierlich eine Produktmischung zur weiteren Verarbeitung in der Produktionsmaschine. Die Produktmischung wird am Mischerauslass bereitgestellt und durch die Fördereinrichtung kontinuierlich dem Maschineneinlass der Produktionsmaschine zugeführt. Es wird darauf hingewiesen, dass sich das kontinuierliche Zuführen insbesondere auf eine kontinuierliche Verarbeitung im Gegensatz zu einem an sich bekannten Batch-Prozess bezieht. Das kontinuierliche Zuführen durch die Fördereinrichtung umfasst insbesondere auch eine intermittierende Zuführung, wie sie zum Beispiel durch pneumatische Fördereinrichtungen erfolgt. Bei der Produktionsmaschine kann es sich zum Beispiel um eine Rundläuferpresse, insbesondere eine Rundläufertablettenpresse, handeln, die die zugeführte Produktmischung in an sich bekannter Weise zu Presslingen, insbesondere Tabletten, verpresst. Es kann sich bei der Produktionsmaschine aber zum Beispiel auch um eine Kapselfüllmaschine handeln, die die Produktmischung in an sich bekannter Weise in Kapseln füllt. Die durch die Produktionsmaschine aus der Produktmischung hergestellten Erzeugnisse, zum Beispiel Presslinge, insbesondere Tabletten, oder Kapseln, werden am Maschinenauslass der Produktionsmaschine bereitgestellt. Es kann eine weitere Verarbeitung erfolgen, zum Beispiel ein Entstauben und/oder Verpacken.

Das System ist ein kontinuierlich arbeitendes System, das also anders als ein nach dem Batch-Prinzip arbeitendes System die zugeführten pulverförmigen Produkte kontinuierlich mischt und zu Erzeugnissen, zum Beispiel Presslingen, insbesondere Tabletten, oder Kapseln, verarbeitet. Das System kann contained sein, zum Beispiel mit einem Containment Level OEB3 oder höher, gemessen zum Beispiel nach dem SMEPAC-Test (Standardized Measurement for Equipment Particulate Airborne Concentrations).

Erfindungsgemäß ist an einer Fülleinrichtung der Produktionsmaschine ein erster Füllstandssensor zum Messen des Pulverfüllstands in der Fülleinrichtung angeordnet. An einem zwischen dem Mischerauslass und der Fördereinrichtung angeordneten Förderreservoir der Fördereinrichtung ist ein zweiter Füllstandssensor angeordnet zum Messen des Pulverfüllstands in dem Förderreservoir. Die von dem ersten Füllstandssensor und dem zweiten Füllstandssensor ermittelten Messdaten werden von einer Steuereinrichtung des Systems empfangen und die Steuereinrichtung steuert auf Grundlage der empfangenen Messdaten beider Füllstandssensoren mindestens einen Produktionsparameter der Produktionsmaschine an.

Über die Fülleinrichtung, an der der erste Füllstandssensor angeordnet ist, wird die Produktmischung der Produktionsmaschine zur Verarbeitung, insbesondere der Herstellung von Erzeugnissen, zugeführt. Die Fülleinrichtung umfasst dabei grundsätzlich alle zwischen dem Einlass der Produktionsmaschine und einem die zugeführte Produktmischung verarbeitenden Teil der Produktionsmaschine, zum Beispiel einer Matrizenscheibe einer Rundläuferpresse, angeordneten Komponenten. Sie kann insbesondere ein zum Beispiel vertikal angeordnetes Füllrohr umfassen, durch das die Produktmischung schwerkraftbedingt gefördert wird. Das Förderreservoir der Fördereinrichtung kann im einfachsten Fall aus einem rohrförmigen Abschnitt bestehen, der stromab des Mischerauslasses angeordnet ist, beispielsweise sich an diesen anschließt. Das Förderreservoir kann auch zum Beispiel trichterförmig ausgebildet sein, zum Beispiel in Form eines trichterförmigen Hoppers, dessen Einlass mit dem Mischerauslass verbunden ist, und dessen Auslass mit einer Förderleitung der Fördereinrichtung verbunden ist. Das Förderreservoir bildet einen Puffer zur Aufnahme und Bereitstellung der Produktmischung bevor diese durch die Fördereinrichtung zu der Produktionsmaschine gefördert wird. Aus diesem Förderreservoir fördert die Fördereinrichtung die Produktmischung. Die Fördereinrichtung kann eine Förderleitung, zum Beispiel einen Förderschlauch, umfassen, durch die bzw. den die Produktmischung gefördert wird.

Der Erfindung liegt der Gedanke zugrunde, dass es wie eingangs erläutert aufgrund der Förderung der Produktmischung mittels der Fördereinrichtung zu Schwankungen eines in einer Fülleinrichtung der Produktionsmaschine gemessenen Füllstands kommen kann. Dies erschwert eine Steuerung von Produktionsparametern der Produktionsmaschine auf Grundlage einer alleinigen Füllstandsmessung stromab der Fördereinrichtung bzw. macht diese praktisch unmöglich. Daher ist erfindungsgemäß ein zweiter Füllstandssensor stromauf der Fördereinrichtung vorgesehen, der den Füllstand in dem Förderreservoir misst. Auf Grundlage einer Korrelation der beiden gemessenen Füllstände können die durch die Fördereinrichtung aus welchen Gründen auch immer erzeugten Förderschwankungen erkannt und für die Steuerung ausgeglichen werden. So führt zum Beispiel ein kurzzeitiges Überfüllen der Fülleinrichtung mit Produktmischung durch die Fördereinrichtung, und damit ein kurzzeitiger Anstieg des gemessenen Füllstands in der Fülleinrichtung, zu einem entsprechend kurzzeitigen Absinken des Füllstands in dem Förderreservoir. Die gemeinsame Betrachtung beider Füllstände erkennt solche Schwankungen der Fördermenge und erlaubt eine zuverlässige Steuerung der Produktionsmaschine unabhängig von solchen Schwankungen. Auch bei Verwendung einer intermittierend arbeitenden pneumatischen Fördereinrichtung kann die gewünschte Balance der Massenströme in dem System jederzeit sicher gewährleistet werden und somit theoretisch ein endloser kontinuierlicher Betrieb des Systems gewährleistet werden.

Die ersten und zweiten Füllstandssensoren können grundsätzlich nach demselben Messprinzip arbeiten. Sie können technisch identisch aufgebaut sein. Dies verbessert die Vergleichbarkeit der Messergebnisse. Die Steuereinrichtung kann auch eine Regeleinrichtung sein, die zum Beispiel den Massenstrom durch das System durch Ansteuern des mindestens einen Produktionsparameters der Produktionsmaschine auf Grundlage der empfangenen Messdaten auf einen gewünschten, insbesondere konstanten Wert, regelt.

Nach einer Ausgestaltung kann der Mischerauslass auf einem vertikal niedrigeren Niveau angeordnet sein als der Maschineneinlass. Bei dieser Ausgestaltung kann zum Beispiel ein die Systemeinlässe, gegebenenfalls Dosiereinrichtungen, und den Mischer umfassendes Zuführ-, Dosier- und Mischmodul neben der Produktionsmaschine, insbesondere auf demselben Boden wie die Produktionsmaschine, angeordnet sein. Wie eingangs erläutert, führt diese Anordnung in vorteilhafter Weise zu einer geringen Bauhöhe, damit einer Einsatzmöglichkeit in gängigen Produktionsräumen und einer guten Zugänglichkeit der Systemkomponenten für Bedienpersonen. Gleichzeitig macht eine solche Anordnung eine Fördereinrichtung erforderlich, die die am Mischerauslass bereitgestellte Produktmischung von dem niedrigeren Niveau des Mischerauslasses auf das höhere Niveau des Maschineneinlasses der Produktionsmaschine fördert.

Nach einer weiteren Ausgestaltung kann die Fördereinrichtung eine pneumatische Fördereinrichtung sein, die die Produktmischung intermittierend vom Mischerauslass zum Maschinenauslass fördert. Beispielsweise kann es sich bei der pneumatischen Fördereinrichtung um eine Dichtstrom-Saugfördereinrichtung handeln. Solche pneumatischen Fördereinrichtungen sind besonders gut geeignet zum Fördern der Produktmischung, da das Risiko einer unerwünschten Entmischung der Bestandteile der Produktmischung minimiert ist. So können zum Beispiel auch pulverförmige Produkte unterschiedlicher Korngrößen in Form der jeweiligen Produktmischung sicher gefördert werden, ohne dass eine unerwünschte Segregation auftritt. Wie eingangs erläutert, wird beispielsweise in pneumatischen Vakuumfördereinrichtungen zyklisch zunächst ein Vakuum am Auslass einer Förderleitung, zum Beispiel eines Förderschlauchs oder eines Förderrohrs, erzeugt, und durch das Vakuum eine erste Produktmenge durch die Förderleitung gefördert. Anschließend wird ein Auslassventil der Förderleitung geöffnet, um die geförderte Produktmenge zum Maschineneinlass auszulassen. Nachfolgend wird das Auslassventil wieder geschlossen und der Zyklus beginnt erneut. Bei solchen pneumatischen Vakuumfördereinrichtungen ist also eine Schwankung der zugeführten Produktmenge systemimmanent, indem das Produkt sozusagen paketweise und damit intermittierend vom Mischerauslass zum Maschineneinlass gefördert wird.

Nach einer weiteren Ausgestaltung kann die Steuereinrichtung dazu ausgebildet sein, auf Grundlage der empfangenen Messdaten mindestens einen Produktionsparameter der Produktionsmaschine so anzusteuern, dass die Summe der durch den ersten Füllstandssensor und den zweiten Füllstandssensor gemessenen Pulverfüllstände (möglichst) konstant ist. Es kann insbesondere eine Regelung durch die Steuereinrichtung, die dann eine Regeleinrichtung sein kann, erfolgen auf eine konstante Summe der durch die Füllstandssensoren gemessenen Pulverfüllstände. Diese Ausgestaltung nutzt die obige Erkenntnis aus, dass ein Ansteigen der Produktmenge in der Fülleinrichtung der Produktionsmaschine insbesondere bei Verwendung einer intermittierend arbeitenden Fördereinrichtung einen entsprechenden Rückgang der Produktmenge im Förderreservoir der Fördereinrichtung bedingt, und umgekehrt. Im eingeschwungenen Zustand des Systems ist die Summe der Pulverfüllstände in der Fülleinrichtung und im Förderreservoir also konstant. Verändert sich die Summe, deutet dies auf einen unerwünscht veränderten Massenstrom durch das System hin, beispielsweise dass der Mischer eine zu große Produktmenge fördert. In diesem Fall wird der Füllstand im Förderreservoir stärker ansteigen als der Füllstand in der Fülleinrichtung abnimmt. Die Summe der Füllstände steigt also an, und dieser Veränderung des Massenstroms kann entgegengewirkt werden. Folglich kann ein Produktionsparameter der Produktionsmaschine auf Grundlage der Summe der durch die Füllstandssensoren gemessenen Füllstände gesteuert bzw. geregelt werden. Um fehlerhafte Messdaten und damit eine fehlerhafte Steuerung bzw. Regelung während des Förderzyklus zum Beispiel einer pneumatischen Fördereinrichtung zu vermeiden, kann vorgesehen sein, dass die Steuereinrichtung die Steuerung während des Förderzyklus der Fördereinrichtung aussetzt. Dieser Förderzyklus der Fördereinrichtung ist vergleichsweise kurz verglichen mit der Ruhezeit der Fördereinrichtung zwischen den Zyklen. Diese Ruhezeit eignet sich besonders für die erfindungsgemäße Steuerung bzw. Regelung. Es wäre aber auch möglich, die Steuerung bzw. Regelung ohne Unterbrechung durchzuführen und dabei jeweils die aktuell gemessenen Füllstände zugrunde zu legen. Die während eines Förderzyklus der Fördereinrichtung geförderten Produktmengen können dann rechnerisch abgeschätzt werden.

Nach einer weiteren Ausgestaltung kann vorgesehen sein, dass die Produktionsmaschine eine Rundläuferpresse ist, umfassend einen mittels eines Drehantriebs drehbaren Rotor, wobei der Rotor eine obere Stempelführung für obere Stempel der Rundläuferpresse und eine untere Stempelführung für untere Stempel der Rundläuferpresse sowie eine zwischen den Stempelführungen angeordnete Matrizenschreibe aufweist, wobei die Stempel mit Kavitäten der Matrizenscheibe zusammenwirken, weiter umfassend eine Fülleinrichtung, durch die zu verpressendes Pulvermaterial in die Kavitäten der Matrizenscheibe gefüllt wird, und an der der erste Füllstandssensor angeordnet ist, und mindestens eine Druckeinrichtung, die im Betrieb mit den oberen Stempeln und mit den unteren Stempeln zum Verpressen des Pulvermaterials in den Kavitäten der Matrizenscheibe zusammenwirkt, weiter umfassend eine Auswurfeinrichtung, in der in den Kavitäten erzeugte Presslinge ausgeworfen werden.

Bei der Rundläuferpresse kann es sich insbesondere um eine Rundläufertablettenpresse handeln. In der Rundläuferpresse zu verarbeitende Produktmischung wird durch das Füllrohr der Matrizenscheibe zugeführt. Die Produktmischung kann schwerkraftbedingt durch die Fülleinrichtung und das Füllrohr gefördert werden.

Das Füllrohr kann also ein Fallrohr bilden. Das Füllrohr kann dazu geeignet angeordnet sein. Zum Beispiel kann die Längsachse des Füllrohrs gegenüber der Horizontalen ausreichend geneigt sein, insbesondere zum Beispiel vertikal verlaufen. Die Fülleinrichtung kann weiterhin mindestens eine Füllkammer aufweisen, in die die Produktmischung aus dem Füllrohr gelangt. Aus der Füllkammer wird die Produktmischung den Kavitäten der Matrizenscheibe zugeführt, insbesondere wiederum schwerkraftbedingt, wo die Produktmischung in an sich bekannter Weise durch die Ober- und Unterstempel zu Presslingen, insbesondere Tabletten, verpresst wird. Die Kavitäten können unmittelbar durch Bohrungen der Matrizenscheibe gebildet sein. Es können in der Matrizenscheibe aber auch lösbar befestigte Matrizenhülsen angeordnet sein, in denen die Kavitäten ausgebildet sind.

Nach einer besonders praxisgemäßen Ausgestaltung kann die Steuereinrichtung dazu ausgebildet sein, auf Grundlage der empfangenen Messdaten als Produktionsparameter mindestens die Drehgeschwindigkeit des Rotors der Rundläuferpresse anzusteuern. Durch eine Ansteuerung der Drehgeschwindigkeit des Rotors kann in einfacher und schnell steuerbarer Weise Einfluss genommen werden auf den Massenstrom durch das System. So führt eine erhöhte Rotorgeschwindigkeit zu einer Verarbeitung von mehr Produktmischung pro Zeit.

Der Mischer kann ein vorzugsweise horizontal ausgerichtetes Mischerrohr aufweisen, in dem eine Mischeinrichtung zum kontinuierlichen Mischen der pulverförmigen Produkte angeordnet ist. Die Mischeinrichtung kann zum Beispiel eine Mischschnecke umfassen, die mittels eines Drehantriebs des Mischers gedreht wird.

Der erste Füllstandssensor und/oder der zweite Füllstandssensor kann ein kapazitiver Füllstandssensor sein. Wie bereits erwähnt, erlauben solche kapazitiven Füllstandssensoren eine präzise und berührungslose Füllstandsmessung ohne den Pulverfluss zu stören.

Nach einer weiteren Ausgestaltung kann vorgesehen sein, dass die Fülleinrichtung ein Füllrohr aufweist, an dem eine erste Messelektrode des ersten Füllstandssensors angeordnet ist, die mit einer ersten Referenzelektrode des ersten Füllstandssensors einen ersten elektrischen Kondensator ausbildet, so dass zwischen der ersten Messelektrode und der ersten Referenzelektrode ein elektrisches Feld ausbildbar ist, und dass die erste Messelektrode auf ihrer dem Füllrohr abgewandten Seite durch eine elektrisch leitfähige Schutzabschirmung abgedeckt ist, wobei die Schutzabschirmung auf Erdpotential liegt.

Entsprechend kann nach einer weiteren Ausgestaltung vorgesehen sein, dass an dem Förderreservoir eine zweite Messelektrode des zweiten Füllstandssensors angeordnet ist, die mit einer zweiten Referenzelektrode des zweiten Füllstandssensors einen zweiten elektrischen Kondensator ausbildet, so dass zwischen der zweiten Messelektrode und der zweiten Referenzelektrode ein elektrisches Feld ausbildbar ist, und dass die zweite Messelektrode auf ihrer dem Förderreservoir abgewandten Seite durch eine elektrisch leitfähige Schutzabschirmung abgedeckt ist, wobei die Schutzabschirmung auf Erdpotential liegt.

Die an dem Füllrohr bzw. dem Förderreservoir angeordneten ersten und zweiten Messelektroden wirken jeweils mit einer ersten bzw. zweiten Referenzelektrode zusammen. Zusammen bilden die Mess- und Referenzelektroden jeweils einen elektrischen Kondensator, ähnlich einem Plattenkondensator. Die erste bzw. zweite Messelektrode erstreckt sich dabei jeweils über einen gewissen Messbereich in Axialrichtung des Füllrohrs bzw. des Förderreservoirs. Beispielsweise kann diese Axialrichtung der Vertikalrichtung entsprechen. Auch die Referenzelektroden können sich jeweils über diesen Bereich erstrecken. Das zwischen den Messelektroden und den Referenzelektroden jeweils ausgebildete elektrische Feld durchdringt das Innere des Füllrohrs bzw. des Förderreservoirs und damit das zu messende pulverförmige Produkt zerstörungsfrei. Die Kapazität des jeweils gebildeten Kondensators hängt von der Permittivität des vom elektrischen Feld durchdrungenen Mediums ab. So weist Luft eine andere Permittivität auf als die Produktmischung. Dadurch kann anhand einer Kapazitätsmessung des jeweiligen Kondensators auf den Grad der Überdeckung der Elektroden durch die pulverförmige Produktmischung geschlossen werden. Daraus wiederum kann auf den Füllstand geschlossen werden. Natürlich können auch mehrere erste bzw. mehrere zweite Messelektroden vorgesehen sein. Die Referenzelektroden können ebenfalls jeweils mehrere (Unter-) Referenzelektroden umfassen bzw. durch mehrere (Unter-) Referenzelektroden gebildet sein.

Bei der vorgenannten Ausgestaltung ist die erste bzw. zweite Messelektrode auf ihrer dem Füllrohr bzw. dem Förderreservoir abgewandten Seite jeweils durch eine elektrisch leitfähige und geerdete Schutzabschirmung abgedeckt, insbesondere vollständig abgedeckt. Das Füllrohr bzw. das Förderreservoir kann zum Beispiel aus einem Metall, wie Edelstahl bestehen. Die Schutzabschirmung kann ebenfalls aus Metall, zum Beispiel Aluminium oder ebenfalls aus Edelstahl bestehen. Auf Grundlage der Erkenntnis, dass das oben beschriebene Active Shielding für die Füllstandsmessung von pulverförmigen Produkten nicht ausreichend ist um insbesondere bei der vorliegenden Anwendung trotz etwaiger externer Störquellen zuverlässige Messergebnisse zu erhalten, basiert die vorgenannte Ausgestaltung weiter auf der Erkenntnis, dass das Fördern von pulverförmigen Produkten durch die Fülleinrichtung bzw. das Förderreservoir zu einer statischen Aufladung der Produktmischung führen kann, die die Messergebnisse beeinflussen kann. Auch muss das Ausschließen externer Störungen, zum Beispiel durch externe elektromagnetische Felder oder in der Nähe der Füllstandssensoren befindliche Personen, aufgrund der erforderlichen besonders hohen Messgenauigkeit zuverlässig erfolgen. Dies wird durch die elektrisch leitfähige und auf Erdpotential liegende Schutzabschirmung erreicht. Sie schirmt die Messelektroden sicher gegen externe elektromagnetische Störquellen ab. Damit kann der Füllstand der Produktmischung in dem Füllrohr bzw. dem Förderreservoir zuverlässig ermittelt werden. Gleichzeitig werden aufwändige Anordnungen mit einer Vielzahl von Messelektroden und komplizierte und unzuverlässige Plausibilitätsbetrachtungen vermieden. Die Innengeometrie des Füllrohrs bzw. des Förderreservoirs bleibt störungsfrei erhalten und der Pulverfluss wird nicht von der Messsensorik gestört oder beeinflusst. Externe Störungen, beispielsweise von elektrischen Anlagen in der Rundläuferpresse oder durch Berührungen durch einen Bediener werden anders als im Stand der Technik nicht rechnerisch aus dem Messergebniss eliminiert, sondern von vornherein wirksam unterdrückt.

Nach einer weiteren Ausgestaltung kann die erste Messelektrode in einem elektrisch nicht leitfähigen, an dem Füllrohr angeordneten Halteabschnitt angeordnet sein und/oder die zweite Messelektrode in einem elektrisch nicht leitfähigen an dem Förderreservoir angeordneten Halteabschnitt angeordnet sein. Auf diese Weise wird eine weiter verbesserte Abschirmung erreicht. Zum Einsatz kommen kann zum Beispiel ein nicht leitfähiger Kunststoff, wie POM. Der Halteabschnitt kann als Ganzes durch die Schutzabschirmung nach außen abgedeckt sein. In dem Halteabschnitt kann eine Manteltasche für die erste bzw. zweite Messelektrode und gegebenenfalls weitere Messelektroden angeordnet sein.

Nach einer weiteren Ausgestaltung kann der Halteabschnitt in einer Aussparung des Füllrohrs und/oder des Förderreservoirs angeordnet sein. Das Füllrohr bzw. das Förderreservoir weist dann einen Ausschnitt auf, in den der Halteabschnitt mit der ersten bzw. zweiten Messelektrode angeordnet ist. Auf diese Weise wird ein besonders guter Messzugang zu der Produktmischung und damit eine besonders genaue Messung erreicht ohne das Risiko einer Störung des Pulverflusses.

Gemäß einer weiteren Ausgestaltung kann ein vor dem und/oder nach dem mit der ersten Messelektrode versehenen Füllrohr befindlicher elektrisch leitfähiger Rohrabschnitt ebenfalls auf Erdpotential liegen und/oder ein vor dem und/oder nach dem mit der zweiten Messelektrode versehenen Förderreservoir befindlicher elektrisch leitfähiger Rohrabschnitt kann auf Erdpotential liegen. Die Erfinder haben erkannt, dass es im Zuge der Förderung der Produktmischung durch die Fülleinrichtung, insbesondere das Füllrohr, bzw. das Förderreservoir, zu einer statischen Aufladung des Pulvermaterials der Produktmischung kommt. Verursacht wird diese nach Erkenntnissen der Erfinder durch die Reibung zwischen dem Pulvermaterial und den das Pulvermaterial führenden Komponenten der Fülleinrichtung bzw. des Förderreservoirs. Durch eine Erdung eines stromauf des mit der ersten bzw. zweiten Messelektrode versehenen Füllrohrs bzw. Förderreservoirs befindlichen elektrisch leitfähigen Rohrabschnitts wird diese statische Aufladung vor der kapazitiven Füllstandsmessung eliminiert, so dass sie die anschließende Messung nicht verfälschen kann. Auch im Zuge der weiteren Pulvermaterialförderung nach der Füllstandsmessung kann es zu einer weiteren/erneuten unerwünschten statischen Aufladung des pulverförmigen Materials kommen. Diese kann sich negativ auf das Verarbeitungsergebnis in der Produktionsmaschine auswirken. Um dies zu verhindern, kann auch eine Erdung eines sich stromab des mit der ersten Messelektrode versehenen Füllrohrs bzw. des mit der zweiten Messelektrode versehenen Förderreservoirs befindlichen elektrisch leitfähigen Rohrabschnitt sinnvoll sein. Auch diese Rohrabschnitte können beispielsweise aus einem Metall, wie einem Edelstahl bestehen.

Die erste bzw. zweite Referenzelektrode kann ebenfalls an dem mit der ersten Messelektrode versehenen Füllrohr bzw. Förderreservoir angeordnet sein. Auch die Referenzelektrode kann dann auf ihrer dem Füllrohr bzw. dem Förderreservoir abgewandten Seite durch die elektrisch leitfähige Schutzabschirmung abgedeckt sein, insbesondere vollständig. Auch die erste bzw. zweite Referenzelektrode kann in dem elektrisch nicht leitfähigen Halteabschnitt angeordnet sein.

Das mit der ersten Messelektrode versehene Füllrohr und/oder das mit der zweiten Messelektrode versehene Förderreservoir, insbesondere seine Wand, kann ebenfalls auf Erdpotential liegen. Auf diese Weise kann neben einer besonders zuverlässigen Messung und einer zusätzlichen elektromagnetischen Abschirmung auch eine statische Aufladung der pulverförmigem Produktmischung in dem mit der ersten bzw. zweiten Messelektrode versehenen Füllrohr bzw. Förderreservoir verhindert bzw. eliminiert werden.

Gemäß einer weiteren Ausgestaltung kann die erste Referenzelektrode durch das mit der ersten Messelektrode versehene Füllrohr gebildet sein und/oder die zweite Referenzelektrode durch das mit der zweiten Messelektrode versehene Förderreservoir, insbesondere seine Wand, gebildet sein. Auf diese Weise bildet die erste bzw. zweite Messelektrode den elektrischen Kondensator direkt mit dem Füllrohr bzw. dem Förderreservoir als Referenzelektrode aus. Es kann somit im Vergleich zu der Anordnung der ersten bzw. zweiten Referenzelektrode an dem Füllrohr bzw. an dem Förderreservoir eine vergrößerte Referenzelektrode als Basis für die Kapazitätsmessung zum Einsatz kommen. Insbesondere wenn das Füllrohr bzw. das Förderreservoir und gegebenenfalls auch die jeweilige Schutzabschirmung ebenfalls auf Erdpotential liegen, kann so eine besonders genaue und zuverlässige Kapazitätsmessung erfolgen.

Gemäß einer weiteren Ausgestaltung kann vorgesehen sein, dass an dem Füllrohr weiterhin eine dritte Messelektrode angeordnet ist, wobei die dritte Messelektrode und die erste Referenzelektrode einen dritten elektrischen Kondensator ausbilden, so dass zwischen der dritten Messelektrode und der ersten Referenzelektrode ein elektrisches Feld ausbildbar ist, und wobei der Messbereich der dritten Messelektrode so gewählt ist, dass er im Betrieb der Rundläuferpresse jederzeit vollständig durch in dem Füllrohr befindliche Produktmischung überdeckt ist. Die Ausdehnung in Längsrichtung des Füllrohrs und damit der Messbereich der dritten Messelektrode ist dabei kleiner als die Ausdehnung der ersten Messelektrode in Längsrichtung des Füllrohrs und damit ihr Messbereich. Beispielsweise kann die Ausdehnung der dritten Messelektrode nicht mehr als 15 %, vorzugsweise nicht mehr als 10 % der ersten Messelektrode betragen. Die dritte Messelektrode kann sich insbesondere parallel zur ersten Messelektrode befinden und im Wesentlichen bündig mit deren unteren Ende abschließen oder über das untere Ende der ersten Messelektrode hinausragen. Das Vorsehen einer solchen dritten Messelektrode die im Betrieb der Rundläuferpresse vollständig durch die in dem Füllrohr befindliche Produktmischung überdeckt ist, erlaubt eine Füllstandsmessung auch bei unterschiedlichen Pulvermaterialien oder Veränderungen in der Zusammensetzung des Pulvermaterials. So kann bei einer vollständigen Überdeckung der dritten Messelektrode mit Pulvermaterial davon ausgegangen werden, dass das zwischen dieser und der ersten Referenzelektrode ausgebildete elektrische Feld vollständig innerhalb des Pulvermaterials ausgebildet ist. Bei bekannter Ausdehnung der dritten Messelektrode in Axialrichtung des Füllrohrs kann rechnerisch aus der für die erste Messelektrode gemessenen Kapazität auch bei unterschiedlichen Pulvermaterialien und ohne aufwendige zusätzliche Kalibriermaßnahmen auf den Füllstand der Produktmischung geschlossen werden. Es ist somit eine Messung unabhängig von dem Pulvermaterial bzw. etwaiger Veränderungen der Zusammensetzung des Pulvermaterials möglich. Es hat sich gezeigt, dass auf diese Weise die Genauigkeit der Messung weiter verbessert werden kann.

Nach einer weiteren Ausgestaltung kann vorgesehen sein, dass an dem Füllrohr weiterhin eine vierte Messelektrode angeordnet ist, wobei die vierte Messelektrode und die erste Referenzelektrode einen vierten elektrischen Kondensator ausbilden, so dass zwischen der vierten Messelektrode und der ersten Referenzelektrode ein elektrisches Feld ausbildbar ist, und wobei der Messbereich der vierten Messelektrode so gewählt ist, dass er sich im Betrieb der Rundläuferpresse jederzeit oberhalb des Füllstands der Produktmischung in dem Füllrohr befindet. Die Ausdehnung in Längsrichtung des Füllrohrs und damit der Messbereich der vierten Messelektrode ist dabei wiederum kleiner als die Ausdehnung der ersten Messelektrode in Längsrichtung des Füllrohrs und damit ihr Messbereich. Beispielsweise kann die Ausdehnung der vierten Messelektrode wiederum nicht mehr als 15 %, vorzugsweise nicht mehr als 10 % der ersten Messelektrode betragen. Die vierte Messelektrode kann sich insbesondere parallel zur ersten Messelektrode befinden und im Wesentlichen bündig mit deren oberen Ende abschließen oder über das obere Ende der ersten Messelektrode hinausragen. Durch eine solche vierte Messelektrode, die im Betrieb der Rundläuferpresse nicht, auch nicht teilweise durch in dem Füllrohr stehende Produktmischung überdeckt ist, kann bei bekannter Ausdehnung der vierten Messelektrode in Axialrichtung des Füllrohrs eine Messung unter Berücksichtigung etwaiger Eigenschaften der Fülleinrichtung, insbesondere des Füllrohrs, erfolgen. Insbesondere können im Betrieb auftretende Veränderungen der Messumgebung ohne Einfluss der Produktmischung erkannt und bei der Füllstandsmessung mittels der ersten Messelektrode berücksichtigt werden.

In entsprechender Weise kann an dem Förderreservoir weiterhin eine fünfte Messelektrode angeordnet sein, wobei die fünfte Messelektrode und die zweite Referenzelektrode einen fünften elektrischen Kondensator ausbilden, so dass zwischen der fünften Messelektrode und der zweiten Referenzelektrode ein elektrisches Feld ausbildbar ist, wobei der Messbereich der fünften Messelektrode so gewählt ist, dass er im Betrieb des Systems vollständig durch in dem Förderreservoir befindliche Produktmischung überdeckt ist. Entsprechend kann an dem Förderreservoir weiterhin eine sechste Messelektrode angeordnet sein, wobei die sechste Messelektrode und die zweite Referenzelektrode einen sechsten elektrischen Kondensator ausbilden, so dass zwischen der sechsten Messelektrode und der zweiten Referenzelektrode ein elektrisches Feld ausbildbar ist, und wobei der Messbereich der sechsten Messelektrode so gewählt ist, dass er sich im Betrieb der Rundläuferpresse oberhalb des Füllstands der Produktmischung in dem Förderreservoir befindet. Zu diesen Ausgestaltungen am Förderreservoir gilt das oben in Bezug auf das Füllrohr Gesagte in entsprechender Weise.

Auch die dritte und/oder die vierte und/oder die fünfte und/oder die sechste Messelektrode kann auf ihrer dem Füllrohr und/oder dem Förderreservoir abgewandten Seite durch die elektrisch leitfähige Schutzabschirmung abgedeckt sein.

Ein Ausführungsbeispiel der Erfindung wird nachfolgend anhand von Figuren näher erläutert. Es zeigen schematisch:
- Figur 1: ein erfindungsgemäßes System in einer perspektivischen Ansicht,
- Figur 2: eine Rundläuferpresse des in Figur 1 gezeigten Systems in einer abgewickelten Darstellung des Rotors,
- Figur 3: einen ersten Füllstandssensor des in Figur 1 gezeigten Systems in einer Seitenansicht,
- Figur 4: eine Schnittansicht entlang der Linie A-A in Figur 3,
- Figur 5: eine vergrößerte teilweise Darstellung des Ausschnitts A in Figur 1 in teilweise geschnittener Ansicht, und
- Figur 6: ein Diagramm zur Veranschaulichung der erfindungsgemäßen Steuerung bzw. Regelung.

Soweit nichts anderes angegeben ist, bezeichnen in den Figuren gleiche Bezugszeichen gleiche Gegenstände.

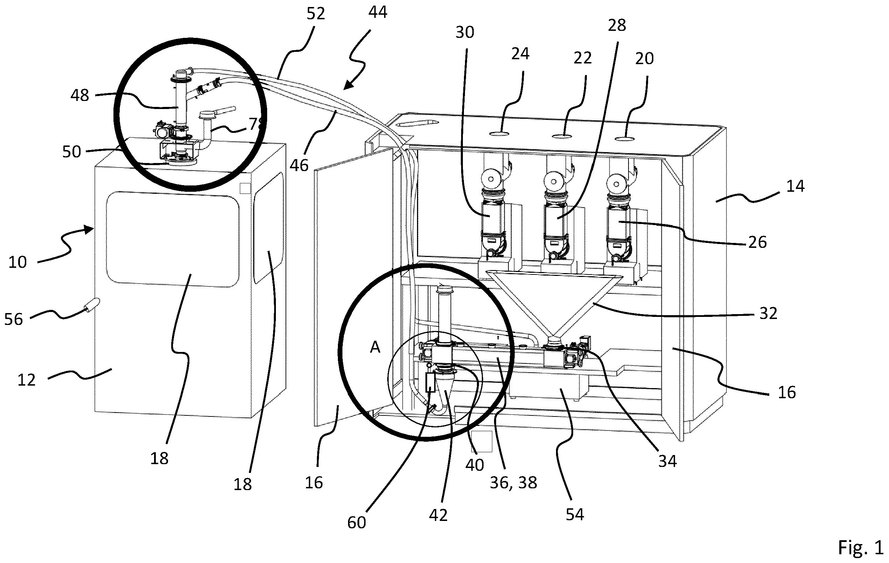

In Figur 1 ist ein System zum kontinuierlichen Verarbeiten von pulverförmigen Produkten gezeigt, umfassend eine Produktionsmaschine 10, vorliegend eine Rundläufertablettenpresse 10. Die Rundläufertablettenpresse 10 ist in einem Gehäuse 12 angeordnet. Ein Modulgehäuse 14 ist neben der Rundläufertablettenpresse 10 auf demselben Boden angeordnet. In Figur 1 ist das Modulgehäuse 14 aus Veranschaulichungsgründen mit geöffneten Türen 16 dargestellt. Das Gehäuse 12 der Rundläufertablettenpresse 10 weist Fenster 18 auf, die für einen Zugang zu der Rundläufertablettenpresse 10 ebenfalls geöffnet werden können.

Das Modulgehäuse 14 weist an seiner Oberseite drei Systemeinlässe 20, 22, 24 auf, über die pulverförmige Produkte zugeführt werden können, zum Beispiel aktive pharmazeutische Bestandteile und/oder Exzipienten. Jeder der Einlässe 20, 22, 24 weist eine Dosiereinrichtung 26, 28, 30 auf, über die die zugeführten pulverförmigen Produkte dosiert werden. Stromab der Einlässe 20, 22, 24 mit den Dosiereinrichtungen 26, 28, 30 befindet sich im dargestellten Beispiel ein Zuführtrichter 32, dem die über die Einlässe 20, 22, 24 und die Dosiereinrichtungen 26, 28, 30 zugeführten pulverförmigen Produkte zugeleitet werden. Der Auslass des Zuführtrichters 32 ist mit einem Mischereinlass 34 eines Mischers 36 verbunden. Der Mischer 36 weist ein in dem dargestellten Beispiel horizontales Mischerrohr 38 auf, in dem eine Mischeinrichtung angeordnet ist, beispielsweise eine drehbare Mischschnecke. In dem Mischerrohr 38 werden die über den Zuführtrichter 32 zugeführten pulverförmigen Produkte zu einer Produktmischung gemischt, die an einem Mischerauslass 40 des Mischers zur Verfügung gestellt wird. Der Mischerauslass 40 steht in Verbindung mit einem im dargestellten Beispiel trichterförmigen Förderreservoir 42 einer Fördereinrichtung 44. Die Fördereinrichtung 44 umfasst weiterhin einen mit dem Auslass des Förderreservoirs 42 verbundenen Förderschlauch 46, dessen anderes Ende über einen Auslasshopper 48 mit einem Maschineneinlass 50 an der Oberseite des Gehäuses 12 der Rundläufertablettenpresse 10 verbunden ist. Im dargestellten Beispiel handelt es sich bei der Fördereinrichtung 44 um eine pneumatische Vakuumfördereinrichtung 44. Entsprechend weist die Fördereinrichtung 44 einen Vakuumschlauch 52 und eine Vakuumerzeugungseinheit 54 auf. Die Vakuumerzeugungseinheit 54 erzeugt über den Vakuumschlauch 52 ein Vakuum am Auslass des Förderschlauchs 46, durch welches die in dem Förderreservoir 42 befindliche Produktmischung durch den Förderschlauch 46 in den Auslasshopper 48 und zum Einlass 50 der Rundläufertablettenpresse 10 gefördert wird. Dazu öffnet ein Auslassventil am Auslass des Förderschlauchs 46 intermittierend und schließt nach Auslass der jeweils geförderten Produktmenge wieder. Anschließend wird dieser Zyklus wiederholt, so dass die Produktmischung aus dem Förderreservoir 42 intermittierend von dem auf einem vertikal niedrigeren Niveau befindlichen Mischerauslass 40 zu dem auf einem vertikal höheren Niveau angeordneten Maschineneinlass 50 der Rundläufertablettenpresse 10 gefördert wird. In der Rundläufertablettenpresse 10 werden aus der zugeführten Produktmischung in nachfolgend noch näher erläuterter Weise Tabletten hergestellt, wobei die Tabletten an einem Maschinenauslass 56 der Rundläufertablettenpresse 10 ausgegeben werden, wo sie einer weiteren Verarbeitung zugeführt werden können, zum Beispiel einem Entstauben und/oder Verpacken.

Das in Figur 1 dargestellte System dient zum kontinuierlichen Verarbeiten von pulverförmigen Produkten zu in der Produktionsmaschine 10 hergestellten Erzeugnissen, im dargestellten Beispiel insbesondere zu in der Rundläufertablettenpresse 10 gepressten Tabletten. Das System kann contained sein, wie oben erläutert. Anstelle einer Rundläufertablettenpresse 10 könnte selbstverständlich auch eine andere Produktionsmaschine 10 in dem System vorgesehen sein, beispielsweise eine Kapselfüllmaschine. Der oben erläuterte Aufbau und die Funktion eines solchen Systems sind grundsätzlich bekannt aus WO 2020/260600 A1.

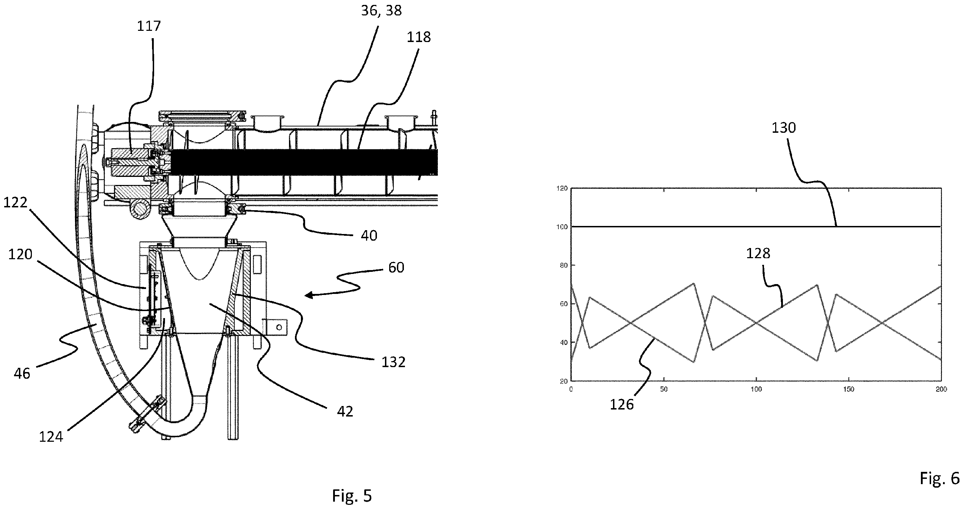

Das in Figur 1 dargestellte erfindungsgemäße System unterscheidet sich von dem bekannten System insbesondere darin, dass an einer Fülleinrichtung der Rundläufertablettenpresse 10 ein nachfolgend noch näher erläuterter erster Füllstandssensor 58 angeordnet ist, dass an dem Förderreservoir 42 der Fördereinrichtung ein zweiter Füllstandssensor 60 angeordnet ist, der in Figur 1 lediglich äußerst schematisch angedeutet ist und nachfolgend mit Bezug auf Figur 5 noch näher erläutert wird, und durch die erfindungsgemäße Auswertung der Messsignale der Füllstandssensoren 58, 60.

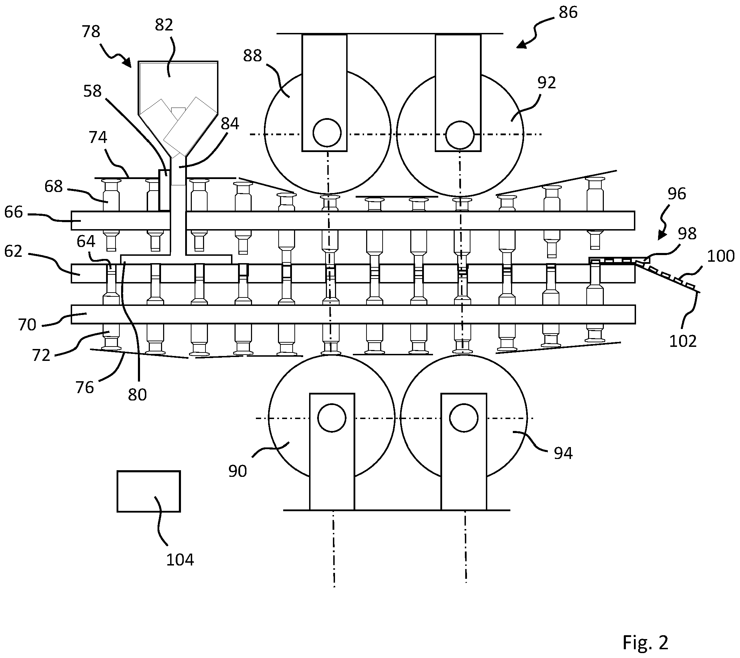

In Figur 2 ist eine beispielsweise bei dem in Figur 1 gezeigten System eingesetzte Rundläufertablettenpresse 10 in einer abgewickelten Darstellung des Rotors gezeigt. Die in Figur 2 gezeigte Rundläufertablettenpresse umfasst einen durch einen nicht näher dargestellten Drehantrieb drehend angetriebenen Rotor mit einer Matrizenscheibe 62, die eine Mehrzahl von Kavitäten 64 aufweist. Die Kavitäten 64 können beispielsweise durch Bohrungen der Matrizenscheibe 62 gebildet sein. Weiter umfasst der Rotor eine Mehrzahl von in einer oberen Stempelführung 66 geführten oberen Stempeln 68 und eine Mehrzahl von in einer unteren Stempelführung 70 geführten unteren Stempeln 72, die mit der Matrizenscheibe 62 synchron umlaufen. Jeweils ein Paar aus oberem Stempel 68 und unterem Stempel 72 ist einer Kavität 64 zugeordnet. Die axiale Bewegung der oberen Stempel 68 und unteren Stempel 72 im Zuge der Drehung des Rotors wird durch obere Steuerkurvenelemente 74 und untere Steuerkurvenelemente 76 gesteuert. Die Rundläufertablettenpresse umfasst weiterhin eine Fülleinrichtung 78, die eine Füllkammer 80 aufweist. Die Fülleinrichtung 78 umfasst ein trichterförmiges Füllmaterialreservoir 82, das über ein Füllrohr 84 mit der Füllkammer 80 in Verbindung steht. Auf diese Weise gelangt in dem vorliegenden Beispiel die pulverförmige Produktmischung über das Füllrohr 84 schwerkraftbedingt in die Füllkammer 80 und aus dieser über eine an der Unterseite der Füllkammer 80 vorgesehene Befüllöffnung wiederum schwerkraftbedingt in die Kavitäten 64 der Matrizenscheibe 62. Außerdem umfasst die Rundläufertablettenpresse eine Druckeinrichtung 86. Die Druckeinrichtung 86 besitzt eine Vordruckeinrichtung mit einer oberen Vordruckrolle 88 und einer unteren Vordruckrolle 90 sowie eine Hauptdruckeinrichtung mit einer oberen Hauptdruckrolle 92 und einer unteren Hauptdruckrolle 94. Beim Durchlaufen der Druckeinrichtung 86 werden die Ober- und Unterstempel 68, 72 in die Kavitäten gedrückt und verpressen dabei die in die Kavitäten gefüllte Produktmischung zu Tabletten 100. Weiter umfasst die Rundläufertablettenpresse eine Auswurfeinrichtung 96, vorliegend mit einem Abstreifer 98, der die in der Rundläuferpresse hergestellten und durch die Unterstempel 72 auf die Oberseite der Matrizenscheibe 62 geförderten Tabletten 100 einem Tablettenablauf 102 zuführt.

Eine Steuereinrichtung 104 steuert den Betrieb der Rundläuferpresse und ist über nicht näher dargestellte Leitungen unter anderem mit dem Drehantrieb des Rotors verbunden. An der Steuereinrichtung 104, die gleichzeitig eine Regeleinrichtung 104 sein kann, liegen außerdem Messergebnisse des ersten Füllstandssensors 58 und des zweiten Füllstandssensors 60 an.

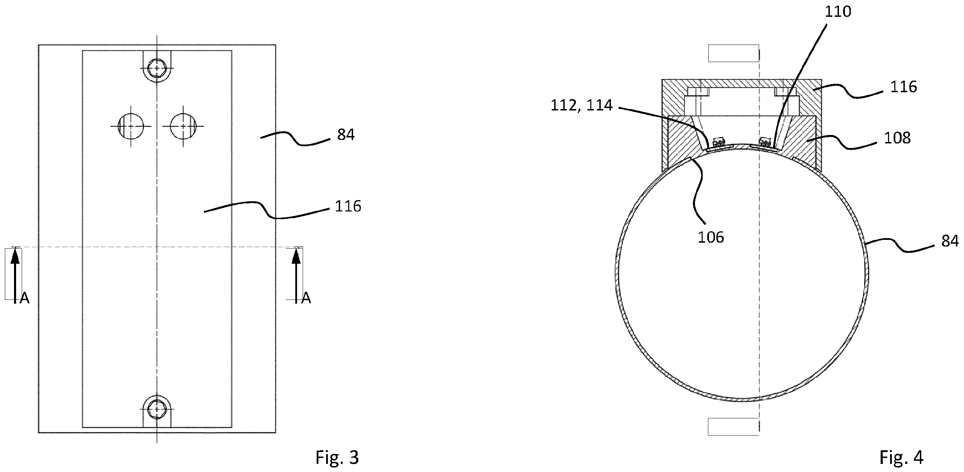

Mit Bezug auf die Figuren 3 und 4 wird zunächst der an dem Füllrohr 84 angeordnete erste Füllstandssensor 58 näher erläutert. Wie in Figur 4 zu erkennen, weist das Füllrohr 84 eine Aussparung 106 auf, in der ein Halteabschnitt 108 aus einem elektrisch nicht leitfähigen Material, beispielsweise einem Kunststoff, wie POM, angeordnet ist. Der Halteabschnitt 108 trägt eine sich in Axialrichtung des Füllrohrs 84 erstreckende erste Messelektrode 110 sowie parallel zu der ersten Messelektrode 110 angeordnete dritte und vierte Messelektroden 112, 114, die sich jeweils parallel zur und über etwa 10 % der Länge der ersten Messelektrode 110 erstrecken. Die dritte Messelektrode 112 ist im Bereich des unteren Endes der ersten Messelektrode 110 angeordnet und die vierte Messelektrode 114 im Bereich des oberen Endes der ersten Messelektrode 110. Der Halteabschnitt 108 und mit ihm die Messelektroden 110, 112 und 114 sind darüber hinaus auf ihrer dem Füllrohr 84 abgewandten Seite durch eine elektrisch nicht leitfähige Schutzabschirmung 116 abgedeckt, die auf Erdpotential liegt. Das Füllrohr 84 liegt in dem dargestellten Beispiel ebenfalls auf Erdpotential. Das Füllrohr 84 und die Schutzabschirmung 116 können zum Beispiel aus einem Metall bestehen. Beispielsweise kann das Füllrohr 28 aus einem Edelstahl bestehen und die Schutzabschirmung 116 aus Aluminium.

Das Füllrohr 84 bildet in dem in den Figuren 3 und 4 dargestellten Ausführungsbeispiel eine erste Referenzelektrode für die Messelektroden 110, 112 und 114. Die Messelektroden 110, 112 und 114 bilden somit drei elektrische Kondensatoren mit dem Füllrohr 84 als erste Referenzelektrode aus, so dass zwischen den Messelektroden 110, 112 und 114 und der ersten Referenzelektrode 84 jeweils ein elektrisches Feld ausbildbar ist. Im Betrieb der Rundläuferpresse kann die dritte Messelektrode 112 jederzeit vollständig mit in dem Füllrohr 84 befindlicher Produktmischung überdeckt sein, während die vierte Messelektrode 114 sich oberhalb des Füllstands der Produktmischung in dem Füllrohr 84 befinden kann. Die erste Messelektrode 110 bildet mit ihrer Längsausdehnung einen Messbereich zum Messen des Pulverfüllstands in dem Füllrohr 84 aus. Im Betrieb wird, angesteuert durch die Steuereinrichtung 104, jeweils ein elektrisches Feld zwischen den Messelektroden 110, 112 und 114 und dem als erste Referenzelektrode dienenden Füllrohr 84 ausgebildet und es wird die Kapazität der jeweils gebildeten Kondensatoren gemessen, wiederum durch die Steuereinrichtung 104. Aus der Kapazitätsmessung schließt die Steuereinrichtung 104 auf den Pulverfüllstand in dem Füllrohr 84. Externe Störeinflüsse können durch die Schutzabschirmung 116 auf Erdpotential weitestgehend minimiert werden. Durch Verwendung des ebenfalls auf Erdpotential liegenden Füllrohrs 84 als Referenzelektrode ist eine besonders genaue und zuverlässige Kapazitätsmessung möglich. Durch die dritte und vierte Messelektrode 112, 114 können durch Veränderungen des Pulvermaterials oder Eigenschaften des Füllrohrs 84 resultierende Einflüsse auf das Messergebnis eliminiert werden.

Anhand der teilweisen Ausschnittsdarstellung des Ausschnitts A aus Figur 1 in Figur 5 soll der Aufbau des in Figur 1 lediglich schematisch angedeuteten zweiten Füllstandssensors 60 näher erläutert werden. In der teilweise geschnittenen Darstellung der Figur 5 ist auch die in dem Mischerrohr 38 angeordnete, mittels eines Drehantriebs 117 drehbare Mischerschnecke 118 zu erkennen. Es wird darauf hingewiesen, dass in Figur 5 aus Veranschaulichungsgründen einige in dem in Figur 1 eingezeichneten Ausschnitt A zu sehende Komponenten nicht dargestellt sind.

In dem dargestellten Beispiel weist der zweite Füllstandssensor 60 eine zweite Messelektrode 120 auf, die im dargestellten Beispiel im Bereich einer Aussparung einen Teil der Wand 132 des trichterförmigen Förderreservoirs 42 bildet. Die Wand 132 des Förderreservoirs 42 bildet im dargestellten Beispiel gleichzeitig eine zweite Referenzelektrode. Auch die Wand 132 des Förderreservoirs 42 kann aus einem Metall bestehen, beispielsweise einem Edelstahl, und kann vorzugsweise auf Erdpotential liegen. Die zweite Messelektrode 120 bildet somit mit der als zweite Referenzelektrode ausgebildeten Wand 132 des Förderreservoirs 42 einen elektrischen Kondensator aus, so dass zwischen der zweiten Messelektrode 120 und der zweiten Referenzelektrode 132 jeweils ein elektrisches Feld ausbildbar ist. Die zweite Messelektrode 120 ist auf ihrer dem Förderreservoir 42 abgewandten Seite wiederum von einer Schutzabschirmung 122 abgedeckt, die auf Erdpotential liegt. Die Schutzabschirmung 122 kann zum Beispiel aus einem Metall bestehen, beispielsweise aus Aluminium.

Im Betrieb wird wiederum angesteuert durch die Steuereinrichtung 104 ein elektrisches Feld zwischen der zweiten Messelektrode 120 und der als zweite Referenzelektrode dienenden Wand 132 des Förderreservoirs 42 ausgebildet und wiederum die Kapazität des gebildeten Kondensators gemessen, wiederum durch die Steuereinrichtung 104. Aus der Kapazitätsmessung schließt die Steuereinrichtung 104 auf den Pulverfüllstand in dem Förderreservoir 42. Wie zu dem ersten Füllstandssensor 58, wird auch für den zweiten Füllstandssensor 60 durch die Schutzabschirmung 122 sichergestellt, dass externe Störeinflüsse minimiert sind. Wie bereits zu dem ersten Füllstandssensor 58 erläutert, wäre es auch zu dem zweiten Füllstandssensor 60 selbstverständlich möglich, in analoger Weise eine fünfte Messelektrode und eine sechste Messelektrode vorzusehen, entsprechend der oben erläuterten dritten und vierten Messelektrode 112, 114 des ersten Füllstandssensors 58. In dem gezeigten Beispiel wird die zweite Messelektrode 120 außerdem von einem Halteabschnitt 124 gehalten, zum Beispiel aus einem Kunststoff, wie POM, wie in Figur 5 zu sehen.

Anhand der Figur 6 soll die erfindungsgemäße Auswertung der durch die beiden Füllstandssensoren 58, 60 bereitgestellten Messsignale erläutert werden. Dabei ist in beliebigen Einheiten der Füllstand über der Zeit dargestellt. Die mit dem Bezugszeichen 126 bezeichnete Kurve zeigt den durch den ersten Füllstandssensor 58 in dem Füllrohr 84 der Fülleinrichtung 78 der Rundläufertablettenpresse 10 gemessenen Füllstand, und die mit dem Bezugszeichen 128 bezeichnete Kurve zeigt den durch den zweiten Füllstandssensor 60 im Förderreservoir 42 der Fördereinrichtung 44 gemessenen Füllstand. Bei dem Bezugszeichen 130 ist eine weitere Kurve dargestellt, die der Summe der Füllstände 126 und 128 entspricht.

Zunächst ist zu erkennen, dass die Füllstandskurven 126 und 128 in der idealisierten Darstellung der Figur 6 weitgehend gegenläufig ausgebildet sind. Die relativ kurzen und steilen Anstiege und Abfälle der Kurven entsprechen jeweils dem Ansaug- bzw. Förderzyklus der pneumatischen Vakuumfördereinrichtung 44. Die dazwischenliegenden längeren Abschnitte, in denen der Füllstand 126 im Füllrohr 84 der Rundläufertablettenpresse 10 fällt und der Füllstand 128 im Förderreservoir 42 steigt, entspricht den Zeiträumen zwischen den Ansaugzyklen der Fördereinrichtung 44, in denen die der Rundläufertablettenpresse 10 zugeführte Pulvermischung verarbeitet wird, während das Förderreservoir 42 aus dem Mischer 36 wieder befüllt wird. In dem in Figur 6 dargestellten idealisierten eingeschwungenen Zustand des erfindungsgemäßen Systems ist die Summe beider Füllstände konstant, wie in der Kurve 130 zu erkennen. Dies ist der angestrebte eingeschwungene Zustand, in dem der Massenstrom durch das System konstant ist.

Bei dem erfindungsgemäßen System bildet die Steuereinrichtung 104 die Summe der durch den ersten und zweiten Füllstandssensor 58, 60 gemessenen Füllstände, also der Kurven 126 und 128, so dass sich die Kurve 130 ergibt. Stellt die Steuereinrichtung 104 ein Ansteigen oder ein Abfallen der Summe, also der Kurve 130, über der Zeit fest, deutet dies auf einen sich ändernden Massenstrom durch das System hin. Um dieser Veränderung des Massenstroms entgegenzuwirken, steuert die Steuereinrichtung 104 auf dieser Grundlage einen Produktionsparameter der Produktionsmaschine 10 an, in dem dargestellten Beispiel die Rotordrehzahl des Rotors der Rundläufertablettenpresse 10. Eine Erhöhung der Rotordrehzahl führt entsprechend zu einer schnelleren Verarbeitung der der Rundläufertablettenpresse 10 zugeführten Produktmischung und eine geringe Rotordrehzahl führt zu einer verlangsamten Verarbeitung der Produktmischung. Auf diese Weise kann durch die Steuereinrichtung 104 Einfluss genommen werden auf den Massenstrom durch das System. Wie bereits erläutert, kann es sich bei der Steuereinrichtung 104 insbesondere um eine Regeleinrichtung 104 handeln, die das erfindungsgemäße System durch Ansteuern der Rotordrehzahl der Rundläufertablettenpresse 10 auf Grundlage der durch den ersten und zweiten Füllstandssensor 58, 60 gemessenen Füllstände auf eine konstante Summe der gemessenen Füllstände, also einen konstanten Massenstrom, regelt.

### Bezugszeichenliste

- 10: Produktionsmaschine / Rundläufertablettenpresse
- 12: Gehäuse
- 14: Modulgehäuse
- 16: Türen
- 18: Fenster
- 20: Systemeinlass
- 22: Systemeinlass
- 24: Systemeinlass
- 26: Dosiereinrichtung
- 28: Dosiereinrichtung
- 30: Dosiereinrichtung
- 32: Zuführtrichter
- 34: Mischereinlass
- 36: Mischer
- 38: Mischerrohr
- 40: Mischerauslass
- 42: Förderreservoir
- 44: Fördereinrichtung
- 46: Förderschlauch
- 48: Auslasshopper
- 50: Maschineneinlass
- 52: Vakuumschlauch
- 54: Vakuumerzeugungseinheit
- 56: Maschinenauslass
- 58: Erster Füllstandssensor
- 60: Zweiter Füllstandssensor
- 62: Matrizenscheibe
- 64: Kavitäten
- 66: Obere Stempelführung
- 68: Obere Stempel
- 70: Untere Stempelführung
- 72: Untere Stempel
- 74: Obere Steuerkurvenelemente
- 76: Untere Steuerkurvenelemente
- 78: Fülleinrichtung
- 80: Füllkammer
- 82: Füllmaterialreservoir
- 84: Füllrohr
- 86: Druckeinrichtung
- 88: Obere Vordruckrolle
- 90: Untere Vordruckrolle
- 92: Obere Hauptdruckrolle
- 94: Untere Hauptdruckrolle
- 96: Auswurfeinrichtung
- 98: Abstreifer
- 100: Tabletten
- 102: Tablettenablauf
- 104: Steuereinrichtung
- 106: Aussparung
- 108: Halteabschnitt
- 110: Erste Messelektrode
- 112: Dritte Messelektrode
- 114: Vierte Messelektrode
- 116: Schutzabschirmung
- 117: Drehantrieb
- 118: Mischerschnecke
- 120: Zweite Messelektrode
- 122: Schutzabschirmung
- 124: Halteabschnitt
- 126: Kurve
- 128: Kurve
- 130: Kurve
- 132: Wand des Förderreservoirs

## Patentansprüche

1. System zum kontinuierlichen Verarbeiten von pulverförmigen Produkten, umfassend mindestens zwei Systemeinlässe (20, 22, 24) für pulverförmige Produkte, einen Mischer (36) zum kontinuierlichen Mischen der pulverförmigen Produkte, wobei der Mischer (36) mindestens einen mit den mindestens zwei Systemeinlässen (20, 22, 24) verbundenen Mischereinlass (34) aufweist, und wobei der Mischer (36) einen Mischerauslass (40) für eine aus den pulverförmigen Produkten erzeugte Produktmischung aufweist, weiter umfassend eine Produktionsmaschine (10) zum kontinuierlichen Verarbeiten der Produktmischung, insbesondere eine Rundläuferpresse (10)oder eine Kapselfüllmaschine, wobei die Produktionsmaschine (10) einen mit dem Mischerauslass (40) verbundenen Maschineneinlass (50) und einen Maschinenauslass (56) für durch die Produktionsmaschine (10) aus der Produktmischung hergestellte Erzeugnisse aufweist, und wobei zwischen dem Mischerauslass (40) und dem Maschineneinlass (50) eine Fördereinrichtung (44) zum Fördern der Produktmischung von dem Mischerauslass (40) zu dem Maschineneinlass (50) angeordnet ist, **dadurch gekennzeichnet, dass** an einer Fülleinrichtung (78) der Produktionsmaschine (10) ein erster Füllstandssensor (58) zum Messen des Pulverfüllstands in der Fülleinrichtung (78) angeordnet ist, und dass an einem zwischen dem Mischerauslass (40) und der Fördereinrichtung (44) angeordneten Förderreservoir (42) der Fördereinrichtung (44) ein zweiter Füllstandssensor (60) zum Messen des Pulverfüllstands in dem Förderreservoir (42) angeordnet ist, und dass eine Steuereinrichtung (104) vorgesehen ist, die die von dem ersten Füllstandssensor (58) und dem zweiten Füllstandssensor (60) ermittelten Messdaten empfängt, und die dazu ausgebildet ist, auf Grundlage der empfangenen Messdaten mindestens einen Produktionsparameter der Produktionsmaschine (10) anzusteuern.

2. System nach Anspruch 1, **dadurch gekennzeichnet, dass** der Mischerauslass (40) auf einem niedrigeren Niveau angeordnet ist als der Maschineneinlass (50).

3. System nach einem der vorhergehenden Ansprüche, **dadurch gekennzeichnet, dass** die Fördereinrichtung (44) eine pneumatische Fördereinrichtung (44) ist, die die Produktmischung intermittierend vom Mischerauslass (40) zum Maschineneinlass (50) fördert.

4. System nach Anspruch 3, **dadurch gekennzeichnet, dass** die pneumatische Fördereinrichtung (44) eine Dichtstrom-Saugfördereinrichtung (44) ist.

5. System nach einem der vorhergehenden Ansprüche, **dadurch gekennzeichnet, dass** die Steuereinrichtung (104) dazu ausgebildet ist, auf Grundlage der empfangenen Messdaten mindestens einen Produktionsparameter der Produktionsmaschine (10) so anzusteuern, dass die Summe der durch den ersten Füllstandssensor (58) und den zweiten Füllstandssensor (60) gemessenen Pulverfüllstände möglichst konstant ist.

6. System nach einem der vorhergehenden Ansprüche, **dadurch gekennzeichnet, dass** die Produktionsmaschine (10) eine Rundläuferpresse (10) ist, umfassend einen mittels eines Drehantriebs drehbaren Rotor, wobei der Rotor eine obere Stempelführung (66) für obere Stempel (68) der Rundläuferpresse und eine untere Stempelführung (70) für untere Stempel (72) der Rundläuferpresse sowie eine zwischen den Stempelführungen (66, 70) angeordnete Matrizenschreibe (62) aufweist, wobei die Stempel (68, 72) mit Kavitäten (64) der Matrizenscheibe (62) zusammenwirken, weiter umfassend eine Fülleinrichtung (78), durch die zu verpressendes Pulvermaterial in die Kavitäten (64) der Matrizenscheibe (62) gefüllt wird, und an der der erste Füllstandssensor (58) angeordnet ist, und mindestens eine Druckeinrichtung (86), die im Betrieb mit den oberen Stempeln (68) und mit den unteren Stempeln (72) zum Verpressen des Pulvermaterials in den Kavitäten (64) der Matrizenscheibe (62) zusammenwirkt, weiter umfassend eine Auswurfeinrichtung (96), in der in den Kavitäten (64) erzeugte Presslinge ausgeworfen werden.

7. System nach Anspruch 6, **dadurch gekennzeichnet, dass** die Steuereinrichtung (104) dazu ausgebildet ist, auf Grundlage der empfangenen Messdaten als Produktionsparameter mindestens die Drehgeschwindigkeit des Rotors der Rundläuferpresse (10) anzusteuern.

8. System nach einem der vorhergehenden Ansprüche, **dadurch gekennzeichnet, dass** der Mischer (36) ein vorzugsweise horizontal ausgerichtetes Mischerrohr (38) aufweist, in dem eine Mischeinrichtung (118) zum kontinuierlichen Mischen der pulverförmigen Produkte angeordnet ist.

9. System nach einem der vorhergehenden Ansprüche, **dadurch gekennzeichnet, dass** der erste Füllstandssensor (58) und/oder der zweite Füllstandssensor (60) ein kapazitiver Füllstandssensor (58, 60) ist.

10. System nach Anspruch 9, **dadurch gekennzeichnet, dass** die Fülleinrichtung (78) ein Füllrohr (84) aufweist, an dem eine erste Messelektrode (110) des ersten Füllstandssensors (58) angeordnet ist, die mit einer ersten Referenzelektrode des ersten Füllstandssensors (58) einen ersten elektrischen Kondensator ausbildet, so dass zwischen der ersten Messelektrode (110) und der ersten Referenzelektrode ein elektrisches Feld ausbildbar ist, und dass die erste Messelektrode (110) auf ihrer dem Füllrohr (84) abgewandten Seite durch eine elektrisch leitfähige Schutzabschirmung (116) abgedeckt ist, wobei die Schutzabschirmung (116) auf Erdpotential liegt.

11. System nach einem der Ansprüche 9 oder 10, **dadurch gekennzeichnet, dass** an dem Förderreservoir (42) eine zweite Messelektrode (120) des zweiten Füllstandssensors (60) angeordnet ist, die mit einer zweiten Referenzelektrode des zweiten Füllstandssensors (60) einen zweiten elektrischen Kondensator ausbildet, so dass zwischen der zweiten Messelektrode (120) und der zweiten Referenzelektrode ein elektrisches Feld ausbildbar ist, und dass die zweite Messelektrode (120) auf ihrer dem Förderreservoir (42) abgewandten Seite durch eine elektrisch leitfähige Schutzabschirmung (122) abgedeckt ist, wobei die Schutzabschirmung (122) auf Erdpotential liegt.

12. System nach einem der Ansprüche 10 oder 11, **dadurch gekennzeichnet, dass** die erste Messelektrode (110) in einem elektrisch nicht leitfähigen, an dem Füllrohr (84) angeordneten Halteabschnitt (108) angeordnet ist, und/oder dass die zweite Messelektrode (120) in einem elektrisch nicht leitfähigen, an dem Förderreservoir (42) angeordneten Halteabschnitt (124) angeordnet ist.

13. System nach Anspruch 12, **dadurch gekennzeichnet, dass** der Halteabschnitt (108, 124) in einer Aussparung (106) des Füllrohrs (84) und/oder des Förderreservoirs (42) angeordnet ist.

14. System nach einem der Ansprüche 10 bis 13, **dadurch gekennzeichnet, dass** ein vor dem und/oder nach dem mit der ersten Messelektrode (110) versehenen Füllrohr (84) befindlicher elektrisch leitfähiger Rohrabschnitt ebenfalls auf Erdpotential liegt und/oder dass ein vor dem und/oder nach dem mit der zweiten Messelektrode (120) versehenen Förderreservoir (42) befindlicher elektrisch leitfähiger Rohrabschnitt ebenfalls auf Erdpotential liegt.

15. System nach einem der Ansprüche 10 bis 14, **dadurch gekennzeichnet, dass** das mit der ersten Messelektrode (110) versehene Füllrohr (84) und/oder das mit der zweiten Messelektrode (120) versehene Förderreservoir (42) ebenfalls auf Erdpotential liegt.

16. System nach einem der Ansprüche 10 bis 15, **dadurch gekennzeichnet, dass** die erste Referenzelektrode durch das mit der ersten Messelektrode (110) versehene Füllrohr (84) gebildet ist und/oder dass die zweite Referenzelektrode durch das mit der zweiten Messelektrode (120) versehene Förderreservoir (42) gebildet ist.

## Claims

1. A system for continuously processing powdery products, comprising at least two system inlets (20, 22, 24) for powdery products, a mixer (36) for continuously mixing the powdery products, wherein the mixer (36) comprises at least one mixer inlet (34) connected to the at least two system inlets (20, 22, 24), and wherein the mixer (36) comprises a mixer outlet (40) for a product mixture produced from the powdery products, further comprising a production machine (10) for continuously processing the product mixture, in particular a rotary press (10) or a capsule filling machine, wherein the production machine (10) comprises a machine inlet (50) connected to the mixer outlet (40) and a machine outlet (56) for articles produced from the product mixture by means of the production machine (10), and wherein a conveying apparatus (44) for conveying the product mixture from the mixer outlet (40) to the machine inlet (50) is arranged between the mixer outlet (40) and the machine inlet (50), **characterized in that** a first fill level sensor (58) for measuring the powder fill level in the filling apparatus (78) is arranged at a filling apparatus (78) of the production machine (10), and **in that** a second fill level sensor (60) for measuring the powder fill level in a conveying reservoir (42) is arranged at the conveying reservoir (42) of the conveying apparatus (44) arranged between the mixer outlet (40) and the conveying apparatus (44), and **in that** a control apparatus (104) is provided which receives the measurement data determined by the first fill level sensor (58) and the second fill level sensor (60) and which is designed to control at least one production parameter of the production machine (10) based on the received measurement data.

2. The system according to claim 1, **characterized in that** the mixer outlet (40) is arranged at a lower level than the machine inlet (50).

3. The system according to any one of the preceding claims, **characterized in that** the conveying apparatus (44) is a pneumatic conveying apparatus (44) which intermittently conveys the product mixture from the mixer outlet (40) to the machine inlet (50).

4. The system according to claim 3, **characterized in that** the pneumatic conveying apparatus (44) is a dense-phase vacuum conveying apparatus (44).

5. The system according to any one of the preceding claims, **characterized in that** the control apparatus (104) is designed to control at least one production parameter of the production machine (10) based on the received measurement data in such a way that the total of the powder fill levels measured by the first fill level sensor (58) and second fill level sensor (60) is as constant as possible.

6. The system according to any one of the preceding claims, **characterized in that** the production machine (10) is a rotary press (10), comprising a rotor that can be rotated by means of a rotary drive, wherein the rotor comprises an upper punch guide (66) for upper punches (68) of the rotary press and a lower punch guide (70) for lower punches (72) of the rotary press as well as a die plate (62) arranged between the punch guides (66, 70), wherein the punches (68, 72) cooperate with cavities (64) of the die plate (62), further comprising a filling apparatus (78) by means of which powder material to be pressed is filled into the cavities (64) of the die plate (62) and at which the first fill level sensor (58) is arranged, and at least one pressure apparatus (86) which cooperates with the upper punches (68) and with the lower punches (72) during operation in order to press the powder material in the cavities (64) of the die plate (62), further comprising an ejection apparatus (96) in which pellets produced in the cavities (64) are ejected.

7. The system according to claim 6, **characterized in that** the control apparatus (104) is designed to control at least the rotational speed of the rotor of the rotary press (10) as the production parameter based on the received measurement data.

8. The system according to any one of the preceding claims, **characterized in that** the mixer (36) comprises a preferably horizontally oriented mixer pipe (38) in which a mixing apparatus (118) is arranged for continuously mixing the powdery products.

9. The system according to any one of the preceding claims, **characterized in that** the first fill level sensor (58) and/or the second fill level sensor (60) is a capacitive fill level sensor (58, 60).

10. The system according to claim 9, **characterized in that** the filling apparatus (78) comprises a filling pipe (84) at which a first measuring electrode (110) of the first fill level sensor (58) is arranged, which first measuring electrode forms a first electrical capacitor with a first reference electrode of the first fill level sensor (58), such that an electrical field can form between the first measuring electrode (110) and the first reference electrode, and **in that** the first measuring electrode (110) is covered on the side thereof facing away from the filling pipe (84) by an electrically conductive protective shield (116), wherein the protective shield (116) is at ground potential.

11. The system according to any one of claims 9 or 10, **characterized in that** a second measuring electrode (120) of the second fill level sensor (60) is arranged at the conveying reservoir (42), which second measuring electrode forms a second electrical capacitor with a second reference electrode of the second fill level sensor (60), such that an electrical field can form between the second measuring electrode (120) and the second reference electrode, and **in that** the second measuring electrode (120) is covered on the side thereof facing away from the conveying reservoir (42) by an electrically conductive protective shield (122), wherein the protective shield (122) is at ground potential.

12. The system according to any one of claims 10 or 11, **characterized in that** the first measuring electrode (110) is arranged in an electrically non-conductive holding portion (108) arranged at the filling pipe (84), and/or **in that** the second measuring electrode (120) is arranged in an electrically non-conductive holding portion (124) arranged at the conveying reservoir (42).

13. The system according to claim 12, **characterized in that** the holding portion (108, 124) is arranged in a cut-out (106) of the filling pipe (84) and/or conveying reservoir (42).

14. The system according to any one of claims 10 to 13, **characterized in that** an electrically conductive pipe portion located upstream and/or downstream of the filling pipe (84) provided with the first measuring electrode (110) is also at ground potential and/or **in that** an electrically conductive pipe portion located upstream and/or downstream of the conveying reservoir (42) provided with the second measuring electrode (120) is also at ground potential.

15. The system according to any one of claims 10 to 14, **characterized in that** the filling pipe (84) provided with the first measuring electrode (110) and/or the conveying reservoir (42) provided with the second measuring electrode (120) is also at ground potential.

16. The system according to any one of claims 10 to 15, **characterized in that** the first reference electrode is formed by the filling pipe (84) provided with the first measuring electrode (110) and/or **in that** the second reference electrode is formed by the conveying reservoir (42) provided with the second measuring electrode (120).

## Revendications

1. Système de traitement continu de produits pulvérulents, comportant au moins deux entrées de système (20, 22, 24) pour des produits pulvérulents, un mélangeur (36) pour le mélange continu des produits pulvérulents, dans lequel le mélangeur (36) présente au moins une entrée de mélangeur (34) reliée aux au moins deux entrées de système (20, 22, 24), et dans lequel le mélangeur (36) présente une sortie de mélangeur (40) pour un mélange de produits fabriqué à partir des produits pulvérulents, comportant en outre une machine de production (10) pour le traitement continu du mélange de produits, en particulier une presse rotative (10) ou une machine de remplissage de capsules, dans lequel la machine de production (10) présente une entrée de machine (50) reliée à la sortie de mélangeur (40) et une sortie de machine (56) pour des articles fabriqués par la machine de production (10) à partir du mélange de produits, et dans lequel un dispositif de transport (44) destiné au transport du mélange de produits depuis la sortie de mélangeur (40) jusqu'à l'entrée de machine (50) est disposé entre la sortie de mélangeur (40) et l'entrée de machine (50), **caractérisé en ce qu'**un premier capteur de niveau de remplissage (58) destiné à mesurer le niveau de remplissage de poudre dans un dispositif de remplissage (78) est disposé au niveau du dispositif de remplissage (78) de la machine de production (10), et **en ce qu'**un deuxième capteur de niveau de remplissage (60) destiné à mesurer le niveau de remplissage de poudre dans un réservoir de transport (42) est disposé sur le réservoir de transport (42) du dispositif de transport (44) disposé entre la sortie de mélangeur (40) et le dispositif de transport (44), et **en ce qu'**il est prévu un dispositif de commande (104), lequel reçoit les données de mesure détectées par le premier capteur de niveau de remplissage (58) et le deuxième capteur de niveau de remplissage (60), et lequel est conçu pour contrôler au moins un paramètre de production de la machine de production (10) sur la base des données de mesure reçues.

2. Système selon la revendication 1, **caractérisé en ce que** la sortie de mélangeur (40) est disposée à un niveau plus bas que l'entrée de machine (50).

3. Système selon l'une des revendications précédentes, **caractérisé en ce que** le dispositif de transport (44) est un dispositif de transport pneumatique (44), lequel transporte le mélange de produits par intermittence depuis la sortie de mélangeur (40) jusqu'à l'entrée de machine (50).

4. Système selon la revendication 3, **caractérisé en ce que** le dispositif de transport pneumatique (44) est un dispositif de transport par aspiration à flux dense (44).

5. Système selon l'une des revendications précédentes, **caractérisé en ce que** le dispositif de commande (104) est conçu pour contrôler au moins un paramètre de production de la machine de production (10) sur la base des données de mesure reçues, de manière à ce que la somme des niveaux de remplissage de poudre mesurés par le premier capteur de niveau de remplissage (58) et le deuxième capteur de niveau de remplissage (60) soit aussi constante que possible.

6. Système selon l'une des revendications précédentes, **caractérisé en ce que** la machine de production (10) est une presse rotative (10), comportant un rotor rotatif au moyen d'un entraînement rotatif, dans lequel le rotor présente un guide de poinçons supérieur (66) pour des poinçons supérieurs (68) de la presse rotative et un guide de poinçons inférieur (70) pour des poinçons inférieurs (72) de la presse rotative ainsi qu'un disque à matrice (62) disposé entre les guides de poinçons (66, 70), dans lequel les poinçons (68, 72) coopèrent avec des cavités (64) du disque à matrice (62), comportant en outre un dispositif de remplissage (78) par le biais duquel du matériau pulvérulent à comprimer est rempli dans les cavités (64) du disque à matrice (62), et sur lequel est disposé le premier capteur de niveau de remplissage (58), et au moins un dispositif de pression (86), lequel coopère avec les poinçons supérieurs (68) et avec les poinçons inférieurs (72) pendant le fonctionnement pour comprimer le matériau pulvérulent dans les cavités (64) du disque à matrice (62), comportant en outre un dispositif d'éjection (96) dans lequel des comprimés fabriqués dans les cavités (64) sont éjectés.

7. Système selon la revendication 6, **caractérisé en ce que** le dispositif de commande (104) est conçu pour contrôler au moins la vitesse de rotation du rotor de la presse rotative (10) en tant que paramètre de production sur la base des données de mesure reçues.

8. Système selon l'une des revendications précédentes, **caractérisé en ce que** le mélangeur (36) présente un tuyau de mélangeur (38) orienté de préférence horizontalement, dans lequel est disposé un dispositif de mélange (118) pour le mélange continu des produits pulvérulents.

9. Système selon l'une des revendications précédentes, **caractérisé en ce que** le premier capteur de niveau de remplissage (58) et/ou le deuxième capteur de niveau de remplissage (60) est un capteur de niveau de remplissage capacitif (58, 60).

10. Système selon la revendication 9, **caractérisé en ce que** le dispositif de remplissage (78) présente un tuyau de remplissage (84) sur lequel est disposée une première électrode de mesure (110) du premier capteur de niveau de remplissage (58), laquelle forme un premier condensateur électrique avec une première électrode de référence du premier capteur de niveau de remplissage (58), de manière à pouvoir former un champ électrique entre la première électrode de mesure (110) et la première électrode de référence, et de manière à recouvrir la première électrode de mesure (110) avec un écran de protection électriquement conducteur (116) sur son côté opposé au tuyau de remplissage (84), dans lequel l'écran de protection (116) est mis à la terre.

11. Système selon l'une des revendications 9 ou 10, **caractérisé en ce qu'**une deuxième électrode de mesure (120) du deuxième capteur de niveau de remplissage (60) est disposée sur le réservoir de transport (42), laquelle forme un deuxième condensateur électrique avec une deuxième électrode de référence du deuxième capteur de niveau de remplissage (60), de manière à pouvoir former un champ électrique entre la deuxième électrode de mesure (120) et la deuxième électrode de référence, et de manière à recouvrir la deuxième électrode de mesure (120) avec un écran de protection électriquement conducteur (122) sur son côté opposé au réservoir de transport (42), dans lequel l'écran de protection (122) est mis à la terre.

12. Système selon l'une des revendications 10 ou 11, **caractérisé en ce que** la première électrode de mesure (110) est disposée dans une section de maintien (108) non conductrice électriquement disposée sur le tuyau de remplissage (84), et/ou **en ce que** la deuxième électrode de mesure (120) est disposée dans une section de maintien (124) non conductrice électriquement disposée sur le réservoir de transport (42).

13. Système selon la revendication 12, **caractérisé en ce que** la section de maintien (108, 124) est disposée dans un évidement (106) du tuyau de remplissage (84) et/ou du réservoir de transport (42).

14. Système selon l'une des revendications 10 à 13, **caractérisé en ce qu'**une section de tuyau électriquement conductrice située en amont et/ou en aval du tuyau de remplissage (84) doté de la première électrode de mesure (110) est également mise à la terre et/ou **en ce qu'**une section de tuyau électriquement conductrice située en amont et/ou en aval du réservoir de transport (42) doté de la deuxième électrode de mesure (120) est également mise à la terre.

15. Système selon l'une des revendications 10 à 14, **caractérisé en ce que** le tuyau de remplissage (84) doté de la première électrode de mesure (110) et/ou le réservoir de transport (42) doté de la deuxième électrode de mesure (120) est/sont également mis à la terre.

16. Système selon l'une des revendications 10 à 15, **caractérisé en ce que** la première électrode de référence est formée par le tuyau de remplissage (84) doté de la première électrode de mesure (110) et/ou **en ce que** la deuxième électrode de référence est formée par le réservoir de transport (42) doté de la deuxième électrode de mesure (120).
